# EUROPÄISCHE PATENTSCHRIFT

(11) **EP 1 024 966 B1**
(45) Veröffentlichungstag und Bekanntmachung des Hinweises auf die Patenterteilung: **02.05.2003**
(21) Anmeldenummer: 97948709.7
(22) Anmeldetag: 27.10.1997
(51) Int. Cl.: B60B 21/10

(54) **GESCHWEISSTES FAHRZEUGRAD**
WELDED VEHICLE WHEEL
ROUE DE VEHICULE SOUDEE

(43) Veröffentlichungstag der Anmeldung: 09.08.2000
(73) Patentinhaber: Michelin Kronprinz Werke GmbH, 42697 Solingen (DE)
(72) Erfinder: BÖNNING, Meinhard, D-42697 Solingen (DE); DUNING, Ralf, D-42719 Solingen (DE); HANSEN, Jörn, D-38179 Schwülper (DE); SCHICHALL, Dieter, D-40723 Hilden (DE)
(74) Vertreter: Meissner, Peter E., Dipl.-Ing.
(86) Internationale Anmeldenummer: DE9702558
(87) Internationale Veröffentlichungsnummer: WO99021727

(56) Entgegenhaltungen:
- DE-A- 3 311 697
- DE-A- 3 442 443
- DE-A- 3 704 384
- DE-A- 4 422 726
- FR-A- 2 325 522
- FR-A- 2 365 449
- PATENT ABSTRACTS OF JAPAN vol. 095, no. 011, 26.Dezember 1995 & JP 07 223402 A (REIZU ENG:KK), 22.August 1995, in der Anmeldung erwähnt

## Beschreibung

Die Erfindung betrifft ein geschweißtes Fahrzeugrad mit einer profilierten Felge, die mit einer Schüssel oder Radscheibe im Bereich des Tiefbettes durch eine Schweißnaht verbunden ist gemäß dem Oberbegriff des Patentanspruches 1. Ein derartiges Fahrzeugrad ist aus der DE 34 42 443 A bekannt.

Im Zuge der Standardisierung von Gütern und Produkten im europäischen Markt sind auch für die Felge von Fahrzeugrädern bestimmte Abschnitte einheitlich festgelegt worden. Dies gilt insbesondere für die Felgenhörner und den Reifensitzbereich hinsichtlich deren axialen bzw. radialen Erstreckung, Übergangsradien und Winkel. Daneben gibt es aber auch Abschnitte insbesondere im Tiefbettbereich, der in einem bestimmten Maße vom Hersteller der Felge frei gestaltet werden kann.

Betrachtet man einmal das Rad unter Belastung, dann ähnelt es elastisch gesehen einem flachliegendem Ei, da das Rad durch das Gewicht des Fahrzeuges verformt und im Bereich der Kontaktfläche mit dem Untergrund platt gedrückt wird. Durch die Rotation des Rades wandert die Ei-Form um das Rad herum, so daß es zu entsprechenden Wechselbeanspruchungen kommt. Ein kritischer Bereich in dieser Hinsicht ist die Anschweißstelle der Schüssel bzw. der Radscheibe im Tiefbettbereich. Hier kann es bei starker Belastung des Rades unter Umständen zu Anrissen kommen. Die Schweißstelle ist auch deshalb problematisch, da durch das Einbringen der Schweißwärme das kaltverfestigte Gefüge der Felge umkristallisiert und grobkörnig wird.

Aus der PA J (Patent Abstracts of Japan) 07223402 A ist ein Fahrzeugrad bekannt, das eine profilierte Felge aufweist, die mit einer Radscheibe im Bereich des Tiefbettes durch eine Schweißnaht verbunden ist. Im Unterschied zu üblichen profilierten Felgen weist die Felge einen auf der Radaußenseite liegenden Abschnitt des Tiefbettes mit starker radialer Verdickung auf. Dieser verdickte Abschnitt ist auf der Innenseite am außenliegenden Ende mit einem rechtwinkligen Absatz versehen, an dem ein auf dem äußersten Umfang angeordneter Vorsprung der Radscheibe beim Einpressen zur Anlage kommt. Eine solche Verdickung eines Felgenabschnittes erhöht zwar die Steifigkeit des Fahrzeugrades, ist aber ungünstig im Hinblick auf das Gewicht und auf die Bildung von Fehlstellen im Bereich der Materialanhäufung. Die Fehlstellen verursachen wiederum eine Unwucht des Fahrzeugrades.

Eine anders geartete Konstruktion ist in der DE 33 11 697 A1 offenbart. Die mit einem Tiefbett versehene profilierte Felge weist auf der Radaußenseite einen zweifachen oder sogar dreifachen Hump auf, wobei der axial weiter innenliegende Hump im Durchmesser geringer ist als der weiter außenliegende. Der jeweilige Hump erstreckt sich kontinuierlich über den Umfang und liegt in einer Ebene rechtwinklig zur Felgenachse. Der Mittelpunkt des jeweiligen Hump liegt exzentrisch zur Felgenachse. Die exzentrische Lage der Humps in unterschiedlichen axialen Positionen führt zu einer dynamischen Unwucht und verursacht Schwingungen des Fahrzeugrades, die mit der Anbringung von Ausgleichsgewichten entweder gar nicht oder nur partiell beherrschbar sind.

Ein besonders gestaltetes PKW-Rad zeigt die DE 37 04 384 A1. Die aus Blech hergestellte profilierte Felge weist ein Tiefbett auf, das mit einer radial nach außen sich erstreckenden Auswölbung versehen ist. In diese Auswölbung ist eine aus Blech gefertigte Schüssel einclipbar, die im ringförmigen Umfangsteil mit einem komplementär zur Auswölbung passenden Wulst versehen ist. Diese Auswölbung im Tiefbett der Felge führt nicht zu einer Versteifung, sondern dient nur der Aufnahme der einclipbaren Schüssel.

Aufgabe der Erfindung ist es, ein geschweißtes Fahrzeugrad der gattungsmäßigen Art so abzuändern, daß ohne Erhöhung des Gewichtes auch bei starker Belastung des Rades die Gefahr eines Anrisses im Bereich der Anschweißstelle minimiert ist.

Diese Aufgabe wird ausgehend vom Oberbegriff mit den im kennzeichnenden Teil des Patentanspruches 1 angegebenen Merkmalen gelöst. Vorteilhafte Weiterbildungen sind Bestandteil von Unteransprüchen.

Im Stand der Technik ist mindestens ein nicht genormter Abschnitt mit einer die Felge versteifenden, radial und über den gesamten Umfang sich erstreckenden Auswölbung versehen. Die Mittelachse der Auswölbung liegt achsgleich zur Felgenachse und befindet sich außerhalb des üblichen Felgenprofils. Erfindungsgemäßliegt je eine Auswölbung im Tiefbett- und Ledgebereich. Diese gezielte Versteifung kann dazu genutzt werden, die bisher erforderliche Mindestdicke für die Felge zu reduzieren. Dabei muß aber berücksichtigt werden, daß ein Teil der sich dadurch ergebenden Gewichtsreduzierung durch die durch die Auswölbung sich ergebende größere gestreckte Länge für die Felge wieder aufgezehrt, im schlechtesten Fall kompensiert wird. Da aber die Gewichtsreduzierung nicht im Vordergrund der Erfindung steht, sondern nur ein willkommener Nebeneffekt ist, erfüllt das erfindungsgemäße Fahrzeugrad auch bei unverändertem Gewicht die höhere Anforderung hinsichtlich der Belastung des kritischen Bereiches der Anschweißstelle.

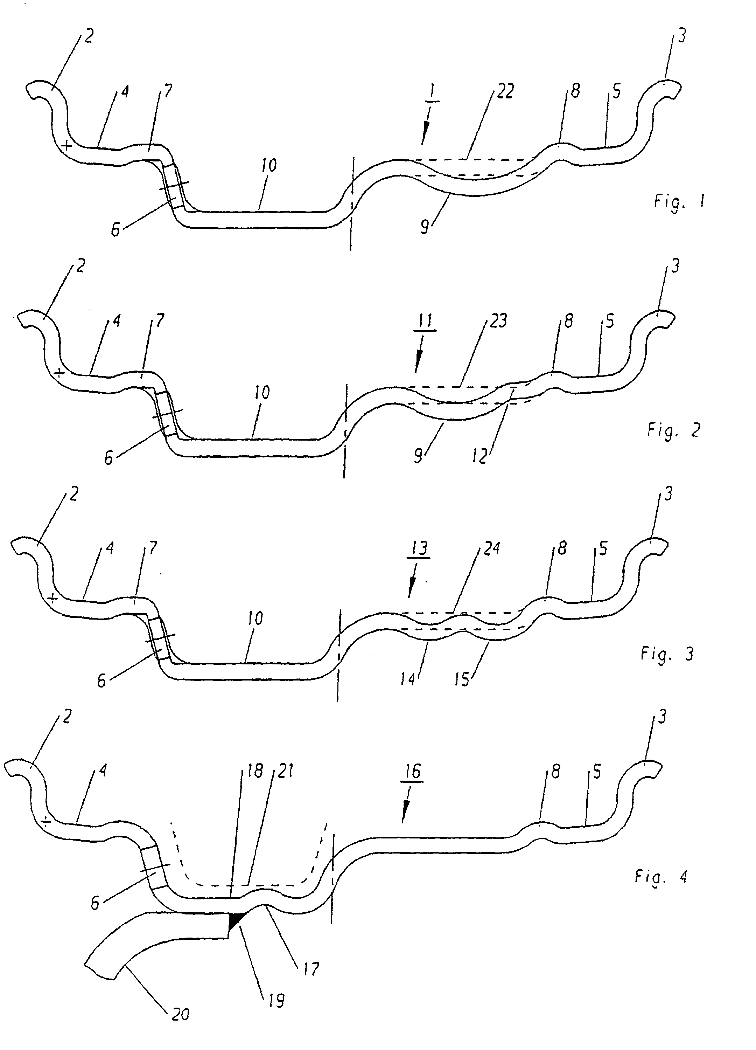

In der Zeichnung wird anhand einiger Ausführungsbeispiele das erfindungsgemäße geschweißte Fahrzeugrad näher erläutert. Es zeigen die Figuren 1 bis 4 Beispiele für Teilaspekte, die das Verständnis der Erfindung gemäß Anspruch 1, erleichtern.

In Figur 1 ist in einem Längsschnitt eine erste Ausführungsform einer Felge 1 dargestellt. Diese weist genormte Abschnitte wie die beiden Felgenhörner 2, 3, die Reifensitzbereiche 4, 5 sowie das Ventilloch 6 auf. In diesem Ausführungsbeispiel ist die Felge 1 mit je einem Hump 7, 8 versehen. Nach einem Teilaspekt der Erfindung ist in einem nicht genormten Abschnitt der Felge 1 eine die Felge 1 versteifende radial nach innen sich erstreckende Auswölbung 9 vorgesehen, die dann übergeht in das Tiefbett 10. Die mit gestrichelten Linien dargestellte Kontur 22 soll die ansonsten übliche Felgenkonfiguration kenntlich machen, um den Unterschied zur erfindungsgemäßen Ausgestaltung zu verdeutlichen.

Die nachfolgenden Figuren 2 bis 4 zeigen weitere Ausführungsformen, wobei für gleiche Bereiche gleiche Bezugszeichen verwendet worden sind. Im Unterschied zu Figur 1 weist die Felge 11 neben der vorgesehenen Auswölbung 9 noch einen Bereich 12 zur Vorzentrierung des hier nicht dargestellten Reifens beim Aufziehen auf. Auch hier ist mit gestrichelten Linien die ansonsten übliche Kontur 23 der Felge dargestellt.

In Figur 3 sind im Unterschied zu Figur 1 für die Felge 13 zwei radial nach innen sich erstreckende Auswölbungen 14, 15 vorgesehen. Kennzeichnend für die in Fig. 1 bis 3 dargestellten Auswölbungen 9, 14, 15 ist die in bezug auf die ursprüngliche Kontur 22, 23, 24 (gestrichelte Linien) außerhalb liegende Profilierung.

In der in Figur 4 dargestellten Ausführungsform ist die versteifende Auswölbung 17 direkt im Tiefbett 18 vorgesehen, wobei im Unterschied zu den vorhergehenden Figuren 1 bis 3 die Auswölbung 17 radial nach außen gerichtet ist. Im Tiefbettbereich 18 ist die hier nur teilweise dargestellte Schüssel 20 über eine Schweißnaht 19 mit der Felge 16 verbunden. Die unmittelbare Nähe der Auswölbung 17 zur Anschweißstelle führt zu einer Entlastung hinsichtlich der Wechselbeanspruchung der Schweißnaht 19 und des diesen umgebenden Bereiches. Mit dem Bezugszeichen 21 ist die nach der Norm vorgeschriebene Mindestkontur gekennzeichnet, so daß die Auswölbung 17 erfindungsgemäß außerhalb dieser Kontur 21 liegt.

## Patentansprüche

1. Geschweißtes Fahrzeugrad mit einer profilierten Felge (1,11,13,16), die mit einer Schüssel oder Radscheibe im Bereich des Tiefbettes (18) durch eine Schweißnaht verbunden ist und die genormte Abschnitte bestehend aus Felgenhorn (2,3) und Reifensitzbereich (4,5) hinsichtlich deren axialen bzw. radialen Erstreckung, Übergangsradien und Winkel und nicht genormte Abschnitte bestehend aus Tiefbettbereich (18) und Ledgebereich aufweist, wobei der nicht genormte Abschnitt mindestens eine die Felge (1,11,13,16) versteifende, radial und über den gesamten Umfang sich erstreckende Auswölbung (9,17) aufweist, und wobei die Mittelachse der Auswölbung (9,17) achsgleich zur Felgenachse liegt,
**dadurch gekennzeichnet,**
**dass** der Tiefbettbereich (18) und der Ledgebereich je eine Auswölbung (9,17) aufweisen.

2. Geschweißtes Fahrzeugrad nach Anspruch 1,
**dadurch gekennzeichnet,**
**dass** der Ledgebereich zwei nebeneinanderliegende Auswölbungen (14,15) aufweist.

3. Geschweißtes Fahrzeugrad nach einem der vorstehenden Ansprüche,
**dadurch gekennzeichnet,**
**dass** die Auswölbungen (9,14,15) radial nach innen gerichtet sind.

4. Geschweißtes Fahrzeugrad nach Anspruch 1,
**dadurch gekennzeichnet,**
**dass** die Auswölbung im Tiefbettbereich (18) radial nach außen gerichtet ist.

## Claims

1. Welded vehicle wheel with a shaped rim (1, 11, 13, 16) which is connected by means of a welded seam to a bowl or wheel disc in the area of the drop base (18), and which has standard sections consisting of the rim bead (2, 3) and the tyre seat area (4, 5) with regard to their axial or radial extents, transition radii and angles; and non-standard sections consisting of the drop base area (18) and ledge area; the non-standard section having at least one bulge (9, 17) which stiffens the rim (1,11, 13 16) and which extends radially and over the entire circumference, and the central axis of the bulge (9, 17) lying in the same axial plane as the rim axis,
**characterised in that**
the drop base area (18) and the ledge area each have a bulge (9, 17).

2. Welded vehicle wheel as in Claim 1,
**characterised in that**
the ledge area has two adjacent bulges (14, 15).

3. Welded vehicle wheel as in one of the preceding Claims,
**characterised in that**
the bulges (9, 14, 15) point radially inwards.

4. Welded vehicle wheel as in Claim 1,
**characterised in that**
the bulge in the drop base area (18) points radially outwards.

## Revendications

1. Roue de véhicule soudée, comportant une jante profilée (1, 11, 13, 16), qui est reliée à un plat ou disque de roue dans la zone de la base creuse (18) par un cordon de soudure, et qui présente des tronçons normés constitués d'un bord de jante (2, 3) et d'une zone de siège de pneu (4, 5) relativement à son extension axiale ou radiale, des rayons de transition et des coudes et des tronçons non normés constitués de la zone de base creuse (18) et de la zone de rebord, le tronçon non normé présentant au moins un bombement (9, 17) rigidifiant la jante (1, 11, 13, 16) et s'étendant radialement et sur toute la périphérie, l'axe central du bombement (9, 17) correspondant à l'axe de la jante,
**caractérisée en ce que** la zone de base creuse (18) et la zone de rebord présentent, à chaque fois, un bombement (9, 17).

2. Roue de véhicule soudée selon la revendication 1,
**caractérisée en ce que** la zone de rebord présente deux bombements adjacents (14, 15).

3. Roue de véhicule soudée selon une des revendications précédentes,
**caractérisée en ce que** les bombements (9, 14, 15) sont orientés radialement vers l'intérieur.

4. Roue de véhicule soudée selon la revendication 1,
**caractérisée en ce que** le bombement dans la zone de base creuse (18) est orienté radialement vers l'extérieur.
